Europäisches Patentamt

European Patent Office

Office européen des brevets

(11) Numéro de publication: **0 402 292**
**A2**

## (12) DEMANDE DE BREVET EUROPEEN

(21) Numéro de dépôt: **90440053.8**

(51) Int. Cl.⁵: **C08L 95/00, E01C 19/10**

(22) Date de dépôt: **08.06.90**

(30) Priorité: **09.06.89 DE 3918819**

(43) Date de publication de la demande:
**12.12.90 Bulletin 90/50**

(84) Etats contractants désignés:
**AT BE CH DE DK ES FR GB GR IT LI LU NL SE**

(71) Demandeur: **Muntzer, Emile**
**1, rue Charles Bergmann**
**F-67000 Strasbourg(FR)**

Demandeur: **Muntzer, Paul Dr.**
**24, Av. du Général de Gaulle**
**F-67000 Strasbourg(FR)**

Demandeur: **Muntzer, Jean**
**6 bis quai de la Citadelle**
**F-59140 Dunkerque(FR)**

Demandeur: **Muntzer, Isabelle**
**43, rue Servan**
**F-75011 Paris(FR)**

(72) Inventeur: **Muntzer, Emile**
**1, rue Charles Bergmann**
**F-67000 Strasbourg(FR)**
Inventeur: **Muntzer, Paul Dr.**
**24, Av. du Général de Gaulle**
**F-67000 Strasbourg(FR)**
Inventeur: **Muntzer, Jean**
**6 bis quai de la Citadelle**
**F-59140 Dunkerque(FR)**
Inventeur: **Muntzer, Isabelle**
**43, rue Servan**
**F-75011 Paris(FR)**

(74) Mandataire: **Nuss, Pierre et al**
**10, rue Jacques Kablé**
**F-67000 Strasbourg(FR)**

(54) Procédé d'enrobage bitumineux aux émulsions cationiques issues d'émulsions anioniques.

(57) La présente invention concerne un procédé d'enrobage bitumineux aux émulsions cationiques issues d'émulsions anioniques réalisé par utilisation d'une solution aqueuse alcaline de farines protéiques qui servent, dans une première phase, à surstabiliser les émulsions-mères anioniques et, dans une deuxième phase, au moyen d'un mélange de sels acidifiants stérilisants et cationisants, à acidifier cette émulsion surstabilisée, rendant ainsi possible une adaptation à tous les cas de figures rencontrés sur les chantiers de fabrication, de transport et de pose d'enrobés bitumineux à froid, sans avoir à changer de type d'émulsion.

Procédé d'enrobage bitumineux aux émulsions cationiques issues d'émulsions anioniques

Les procédés d'enrobage bitumineux à froid à l'aide d'émulsions, décrits par FR-A-2 608 185, FR-A-2 608 649 et FR-A-2 612 214, ainsi que par EP-A-0 275 461 sont entrés dans un stade où il convient d'en sélectionner les plus efficients et les plus économiques, à la fois en ce qui concerne les produits chimiques utilisés, pour la préservation de l'environnement, et en vue de garantir à l'entrepreneur un déroulement facile tenant compte des conditions changeantes rencontrées sur les chantiers.

Par cette sélection, la technique d'enrobage à froid à l'aide d'émulsions de bitume devient accessible à une plus large couche d'entrepreneurs et devient aisément transférable aux grandes centrales à béton de ciment. Il sera recherché une confrontation avec les procédés d'enrobage devenus possibles avec les émulsions du marché, à la fois sur les plans technique et économique.

Le détour par l'émulsion anionique, afin de parvenir à l'émulsion cationique du procédé, constitue un progrès marquant, notamment du fait qu'aucune adaptation de l'émulsion d'enrobage du procédé à la nature des granulats minéraux, à leur degré de souillure et à leur composition granulométrique n'est plus nécessaire.

Les qualités de l'émulsion cationique du procédé se superposent avec les avantages apportés par l'émulsion-mère anionique qui, à l'aide de matières protéiques sélectionnées et d'alcalis, est facilement obtenue à un haut degré de stabilité.

En application du procédé, cet état de haute stabilité suffit à introduire sans inconvénients les produits chimiques qui en font une émulsion cationique très performante.

Parmi les sources de protéines, les farines obtenues à partir des tourteaux de graines oléagineuses sont les plus économiques et il est possible d'utiliser celles qui ne conviennent pas à l'alimentation animale. Ces déchets peuvent ainsi trouver une application dans la technique routière.

Les farines de protéines solubles forment un pont entre l'état anionique de l'émulsion-mère et l'émulsion cationique du procédé. En effet, environ 1,5 % de ces farines, contenant 40 % à 50 % de protéines, par rapport au poids de l'émulsion anionique, suffit à stabiliser ladite émulsion de telle manière que n'importe quel mélange de granulats -y compris les plus fins- est mouillable par cette émulsion, donc touché par le bitume, à condition de chasser l'eau des interfaces au profit du bitume, ce qui revient à transformer cette émulsion anionique très stable en une émulsion cationique.

Tous les acides et sels acides capables de créer un miliéu acide d'un pH < 5,5 conviennent pour une cationisation. Parmi ces acidifiants, se distinguent particulièrement, à la fois pour leur activité et leur faible coût, l'anhydride sulfureux $SO_2$ et le sulfate de fer $FeSO_4 7H_2O$, ce dernier étant un déchet genant, donc bon marché, de la grande industrie chimique minérale.

Simultanément, la grande stabilité due à la farine protéique permet l'introduction de produits chimiques qui déclenchent et contrôlent une rupture adhésive au contact des granulats minéraux à enrober, ce qui est d'ailleurs le propre d'une émulsion cationique.

De plus, on a le choix du stérilisant à introduire dans l'émulsion pour éviter la pourriture malodorante des protéines. Les sulfites se substituent avantageusement au chlore, à la formaline, etc..., qui présentent des gênes pour l'environnement.

En vue de passer en milieu acide, l'acide sulfureux $H_2SO_3$, naissant dans l'émulsion par injection de $SO_2$, ou les autres acides corrosifs, tels HCl, etc..., sont opportunément remplacés par le sel acide $FeSO_4 7H_2O$ qui n'est pas dangeureux, est facile à manier et constitue un déchet abondant dans l'industrie chimique.

Il paraît contraire à une saine économie, voire même aberrant et peu pratique, qu'après la révélation de l'aptitude du $SO_2$ injecté dans l'émulsion à safisfaire, à lui seul, les trois conditions de l'acidification, de la stérilisation et du contrôle de la rupture, l'emploi du sulfate de fer soit proposé comme acidifiant, surtout que pour la stérilisation et le contrôle de la rupture un sel sulfureux devient en plus nécessaire.

Cette problématique trouve sa justification dans le fait que la manipulation de $SO_2$ en bouteilles soumises à une pression de plus de trois atmosphères peut sans doute être maîtrisée en usine d'émulsion fixe par un personnel formé et compétent, mais serait d'un emploi plus délicat en usine itinérante, ce qui pourrait entraîner des problèmes pour l'environnement en cas d'erreur de manipulation.

Par contre, la manipulation d'un mélange de $FeSO_4 7H_2O$ et de $Na_2SO_3$, éventuellement $Na_2S_2O_5$, est anodine et sans danger, quelle que soit l'entreprise utilisatrice. On aurait pu se passer de l'emploi de $FeSO_4 7H_2O$ si les sels de l'acide sulfureux $NaHSO_3$ ou $Na_2S_2O_5$, par exemple, étaient capables de générer un milieu acide suffisamment accusé. Du fait que ceci n'est pas le cas, les avantages d'un mélange comportant, par exemple, une partie de $Na_2SO_3$ et une partie de $FeSO_4 7H_2O$ seront mises en évidence dans la description qui suit.

Il existe actuellement plusieurs nouveaux procédés pouvant être mis en oeuvre par une entreprise possédant une usine d'émulsions intégrée dans les circuits de son poste d'enrobage à froid, si elle renonce à l'injection de $SO_2$ au profit d'un mélange de sulfate de fer et de sels sulfureux, qui sont plus faciles à manier et offrent des possibilités plus variées.

L'émulsion anionique protéinée refroidie peut, sans autre addition, être acheminée vers les malaxeurs d'enrobage. Aussi longtemps que le mélange de sulfate de fer et de sulfites n'est pas ajouté, l'état de l'enrobé qui en résulte reste inchangé et n'évolue vers aucune rupture. Seule une evaporation importante de l'eau qu'il contient pourrait faire sortir le bitume de son état d'émulsion. Le camion malaxeur de transport de béton, qui permet de transporter cet enrobé sans aucune évolution vers une rupture, à toute distance, s'impose préférentiellement.

Peu avant la pose de l'enrobé, à partir du véhicule porteur du malaxeur arrivé à pied d'oeuvre, le mélange de sels précité est introduit dans le malaxeur à un taux qui varie en fonction du temps de rupture désiré, ainsi que des données météorologiques.

Le taux minimum de sels se situe autour de 0,5 % du poids de l'émulsion pour une émulsionmère peu alcaline. Pour ce qui est des émulsions du procédé qui sont destinées au stockage et aux clients, le mélange de sels peut être incorporé à l'émulsion anionique protéinée, soit sous forme de sels, soit sous forme de leur solution aqueuse. Il est rapppelé que l'émulsion cationique ainsi réalisée ne réagit à la rupture et à l'adhésivité qu'au contact des granulats de l'enrobé. Suivant le taux de sels introduit, les émulsions peuvent être livrées à rupture rapide, moyenne ou lente. Si, par exemple, l'émulsion du procédé est standardisée à rupture lente, le client peut, en fournissant les sels supplémentaires, lui-même adapter cette émulsion aux conditions de ses chantiers, en dosant le supplément de sels dans le malaxeur ou sur les granulats acheminés par les bandes transporteuses vers les malaxeurs. Cette technique reste valable pour les coulis comme pour les compositions classiques des enrobés bitumineux.

A la limite, le procédé peut être appliqué par simple achat de l'émulsion anionique, ainsi que de la farine protéique, du sulfate de fer et du sel sulfureux, puis par fabrication des enrobés d'après la description ci-dessus. Par extension à des usines fixes de béton de ciment, le procédé peut être mis en oeuvre rapidement, à grande échelle. Il suffit, en effet, d'une adaptation relativement simple d'une telle usine pour pouvoir produire, en alternance, du béton de ciment et du béton bitumineux.

En général, une telle installation est dotée d'une flotille de transporteurs-malaxeurs, ce qui entraîne une économie d'investissement considérable.

Toutefois, au lieu d'acheter l'émulsion anionique dans le commerce au prix fort et en transportant inutilement de l'eau, il est plus avantageux d'adjoindre une usine d émulsion à chaque usine ou ·groupe d'usines de béton. Il suffit, en cas de fabrication de béton bitumineux, d'introduire la composition granulaire de la formule prévue dans le malaxeur de béton de l'installation ensemble avec une dose de farine protéique sous forme d'une dilution aqueuse, dont la formule moyenne est, par exemple :

900 Kg d'eau
100 Kg de farine
5 Kg à 15 Kg de NaOH en solution aqueuse de 30 % ou de $Na_2CO_3$.

Après quelques rotations du malaxeur, la dose d'émulsion anionique est ajoutée sans autre adjuvant que du NaOH ou du $NA_2CO_3$ à titre exceptionnel. Cette émulsion trouve dans le malaxeur un milieu stabilisant qui n'incite pas à la rupture, à condition que le malaxeur ait été nettoyé des restes de ciment.

L'enrobé ainsi stabilisé est transféré dans le malaxeur transporteur et peut être transporté au minimum à des distances usuelles pour les enrobés à chaud, mais peut théoriquement subir un transport d'une journée et plus si l'évaporation de l'eau est évitée. Peu avant l'introduction de l'enrobé dans les appareils de pose, la dose de mélange de sels est introduite dans le malaxeur-transporteur proportionnellement au temps de rupture désiré.

Le débit du poste d'enrobage bitumineux greffé sur une usine de béton de ciment correspond au moins à celui pour lequel l'usine a été conçue. L'usine d'émulsion, qui est adjointe à un tel poste, peut être simplifiée pour ne faire que de l'émulsion anionique refroidie.

Dans le cas où une entreprise ne possèderait pas de poste de fabrication de béton, mais uniquement des transporteurs-malaxeurs, l'un de ces véhicules pourrait ne réaliser que les enrobés à l'émulsion protéinée qu'il transvaserait aux autres transporteurs desservant les chantiers et qui, à pied d'oeuvre, utiliserait les sels cationisants. Comme les cuves des transporteurs doivent être lavées chaque fois qu'elles ont reçu les sels cationisants, il est encore plus simple d'affecter tous les transporteurs au service des chantiers en les garnissant, après lavage, de la dose en granulats et en émulsion simplement protéinée en surstabilisation alcaline. Cette manière de procéder permet d'organiser des chantiers volants pouvant facilement être suivis par la flotille de transporteurs-malaxeurs.

Ce procédé peut également être mis en oeuvre à partir des ateliers d'un entrepreneur en vue d'organiser un programme de réparation et d'entretien dispersé et ponctuel. En effet, à partir des stocks d'émulsion anionique, de farine en solution de surstabilisation alcaline, et de sels cationisants, la quantité d'enrobé protéiné pour la journée peut être préparée dans un transporteur-malaxeur qui dépose les quantités unitaires nécessaires auprès des diverses équipes. Ces dernières, qui sont dotées des moyens pour mélanger les sels au moment de la pose de l'enrobé, disposent de tout le temps nécessaire pour le travail, en tenant compte des interruptions et des reprises, à condition que l'enrobé protéiné soit protégé du dessèchement et de la pluie.

Ce procédé permet également la pose, à grande vitesse, de coulis tout en conservant les traineaux de répartition existants, en remplaçant les convois spéciaux de transport de granulats, d'émulsion, de ciment, etc..., par le transporteur-malaxeur connu dote d'un doseur du mélange des sels cationisants.

Ainsi, et contrairement aux affirmations existant à ce jour, traitant de l'impossibilité de pouvoir stocker ou ensiler les enrobés à froid à émulsion cationique selon ce procédé, il apparait que le détour par l'émulsion anionique uniquement protéinée en surstabilisation alcaline permet d'organiser un stockage à ciel ouvert ou sous un hangard des enrobés à froid qui, repris par des chargeurs ou des bandes transporteuses, pourraient être confiés à des transporteurs-malaxeurs et cationisés à pied d'oeuvre comme décrit ci-dessus.

Il existe des cas de granulats, en particulier leur sable, où la stabilisation par la solution aqueuse de la farine protéique peu alcalinisée n'arrive pas à neutraliser une certaine souillure acide qui peut accompagner les granulats à enrober. Pour y remédier, il est plus économique et plus pratique d'augmenter, soit le taux d'alcalis dans la solution alcaline de la farine, soit de surstabiliser au maximum, même systématiquement, l'émulsion-mère anionique en augmentant le taux d'alcalis dans l'eau émulsifiante préparée par l'usine d'émulsion, plutôt que d exagérer en hausse la dose de farine solubilisée au-delà de 1,5 % du poids de l'émulsion.

Cette augmentation de stabilité du système par les alcalis, plutôt que par le taux de farine, nécessite une augmentation proportionnelle de la dose du mélange des sels cationisants et stérilisants, ce qui reste sans conséquence défavorable pour le procédé, la rupture par les sulfites restant assurée.

Il a été constaté qu'il est plus avantageux, à tous points de vue, d'augmenter la stabilité de l'émulsion-mère anionique, non pas systématiquement par un taux supérieur de farine, mais par un taux d'alcalis aussi élevé que possible, de sorte que la solution des farines protéiques précitée doit être considérée comme étant d'un emploi plus restreint et doit être remplacée par une solution de 250 Kg d'eau + 50 Kg de farine protéique + 50 Kg de soude caustique en solution à 30 %. Ainsi, pour obtenir le taux universellement suffisant de 1,5 % de farine protéique par rapport au poids de l'émulsion, il est nécessaire d'ajouter 10 % de cette solution à l'émulsion-mère anionique qui, de ce fait, acquiert une stabilité à l'épreuve des agrégats les plus prompts à la rupture en milieu alcalin. La diminution du taux de bitume qui résulte du fait de cet ajout, soit environ 5 %, est compensée par la fabrication d'une émulsion-mère d'un taux de bitume supérieur à 60 %. Cette solution remplace avantageusement l'ajout direct de la farine dans l'émulsion-mère et constitue une simplification pour l'usine d'émulsion. En outre, elle apporte en général la quantité d'eau suffisante aux granulats et une stabilité à toute épreuve dans ce milieu alcalin.

Cette formule a l'avantage de permettre l'introduction d'un maximum d'alcalinité dans l'émulsion-mère qui, en la cationisant, par exemple par un mélange comportant 67 % de sulfate de fer et 33 % de sulfite, passe plus facilement, c'est-à-dire avec moins d'épaississement, du milieu alcalin en un milieu acide.

Dans tous les cas, il est recommandé, soit d'ajouter l'émulsion protéinée fortement alcaline sur les granulats tournant dans le malaxeur, soit de protéiner ces granulats par la solution fortement alcaline de farine et de soude caustique ou de soude $Na_2CO_3$ avant d'ajouter la dose de l'émulsion-mère anionique. Les enrobés qui en résultent sont transportables à n'importe quelle distance ; ils sont acidifiés et stérilisés à pied d'oeuvre par $FeSO_4 7H_2O$ et un sulfite, de préférence aux acides forts, ce qui engage la rupture adhésive de cette émulsion devenue cationique.

L'émulsion cationique du procédé conforme à l'invention peut recevoir sa dose de sels cationisants et stérilisants dans l'usine d'émulsion au moment de son passage par lé deuxième moulin colloïdal, respectivement la pompe à roues dentées.

Le fait d'utiliser au maximum la capacité de stabilisation de l'émulsion-mère anionique par les alcalis, plutôt que par un taux supérieur de protéines, présente plusieurs avantages, dont celui, par exemple, de pouvoir réduire le taux de protéines à son niveau extrême, qui se situe, pour la solution alcaline concentrée indiquée plus haut, à pratiquement 0,5 % de farine par rapport au poids de l'émulsion, au lieu de 1,5 % nécessaire sans cette surstabilisation alcaline. Il est donc possible de travailler avec des marges de sécurité considérables et avec la certitude de posséder un stabilisant qui, correctement dosé, convient à tous les granulats, mais surtout aux granulats souillés dont l'humidité accuse un pH < 7 et de surcroît très filléreux, ainsi qu'aux matériaux de recyclage bitumineux contenant, notamment, des résidus goudronneux.

Le surcroît de sulfate de fer $FeSO_4 7H_2O$, né-

cessaire pour neutraliser ce taux élevé d alcalis, accroit le taux de $Na_2SO_4$, sans influence notable sur le procède et celui de $Fe(OH)_2$ pratiquement insoluble, ne genant pas non plus dans l'enrobé bitumineux, cela sans que le coût du procédé soit défavorablement affecté par le prix très bas du sulfate de fer, qui est, d'ailleurs, largement compensé par une réduction possible du taux de la farine protéique.

Le taux de sulfite n'a pas besoin de suivre dans les mêmes proportions et un taux de 0,2 % par rapport au poids de l'émulsion est suffisant pour qu'il soit actif, à la fois pour la rupture et la stérilisation. C'est la raison pour laquelle le mélange de sels cationisants et stérilisants peut être augmenté en ce qui concerne le sulfate de fer à 67 % au moins, ce qui réduit la part du sulfite à 33 % par exemple.

La faculté de disposer de tolérances aussi importantes pour toutes les matières entrant dans le procédé permet d'en proposer une généralisation passe-partout en standardisant les composés entrant dans le procédé afin qu'il soit opérationnel dans toutes les circonstances de chantiers, à savoir du coulis aux formulations granulaires qui sont à la base de la technique de l'enrobage à chaud, sans avoir recours à d'autres émulsions en cas de changement de nature des granulats, acides ou basiques, ou de recyclage ou de leur mélange.

Parmi les nombreuses adaptations possibles du procédé, une première proposition, pour un poste d'enrobage à froid donné,est de travailler exclusivement avec :

1. une émulsion anionique refroidie à un taux de bitume supérieur à 60 %,

2. une solution de 250 Kg d'eau + 50 Kg de farine protéique + 50 Kg de solution de soude caustique à 30 %,

3. un mélange de sels composé de 67 % de sulfate de fer $FeSO_47H_2O$ et de 33 % de sulfite de sodium $Na_2SO_3$

A partir de ces constantes, qui simplifient le fonctionnement de l'usine d'émulsion et celui du poste d'enrobage à froid, tous les cas de figure d'un enrobage à froid aux émulsions de bitume sont réalisables. Il est à noter que la solution fortement alcalinisée par NaOH de la farine protéique doit être renouvelée tous les jours au risque de devenir inopérante.

Une variante, qui élimine la précarité de la solution fortement alcalinisée par NaOH, consiste à introduire la farine protéique dans l'émulsion-mère anionique, conformément au procédé décrit dans les brevets précités, étant entendu que le petit excès de soude caustique que contient cette émulsion suffit à solubiliser les protéines contenues dans la farine par une combinaison ne brisant pas la molécule protéique, donc sans en diminuer l'efficacité dans le temps.

Cette émulsion protéinée, légèrement alcaline, peut être surstabilisée efficacement par la soude $Na_2CO_3$, qui préserve les protéines, tout en ayant la même capacité de stabilisation que NaOH.

Il en résulte une deuxième proposition, pour un poste d'enrobage donné, de travailler exclusivement avec :

1. une émulsion anionique fabriquée à partir d'un bitume acidifié, mise en émulsion avec une eau alcalinisée par la soude caustique NaOH à un taux compris entre 0,1 % et 0,5 % par rapport au poids de l'émulsion, ayant un taux de bitume supérieur à 60 %, protéinée à un taux de farine compris entre 1 % et 1,5 % par rapport au poids de l'émulsion,

2. une solution concentrée de soude $Na_2CO_3$ introduite, soit dans cette émulsion refroidie, à raison de 5 % à 10 % de son poids, soit pré-mélangée avec les granulats tournant dans le malaxeur

3. un mélange de sels composé de 67 % de sulfate de fer $FeSO_47H_2O$ et de 33 % de sulfite de sodium $Na_2SO_3$.

## Revendications

1. Procédé d'enrobage bitumineux aux émulsions cationiques issues d'émulsions anioniques par transformation d'émulsions anioniques bitumineuses en émulsions cationiques acides par l'intermédaire de matières protéiques in-situ ou en mélange avec les granulats tournant dans un malaxeur, caractérisé en ce que l'anhydride sulfureux $SO_2$, injecté dans une émulsion anionique protéinée en état de surstabilisation alcaline, la transforme en une émulsion cationique caractérisée par une rupture progressive d'autant plus prononcée que le taux de $SO_2$ injecté est élevé et que, par voie de conséquence, le pH est plus petit, ce qui, simultanément, protège l'émulsion de la pourriture malodorante et affirme ses propriétés cationiques par une rupture adhésive sur les granulats minéraux à revêtir de bitume.

2. Procédé, suivant la revendication 1, caractérisé en ce qu'à la place de $SO_2$, respectivement $H_2SO_3$, les sels de l'acide sulfureux, tels que $Na_2SO_3$, $NaHSO_3$, $Na_2S_2O_5$ etc..., introduits dans une émulsion anionique en état de surstabilisation alcaline créent la même rupture que celle provoquée par $SO_2$, mais ne permettent pas une adhésivité suffisante par manque d'acidité, une acidité suffisante étant rétablie par l'ajout d'acides de force égale ou supérieure à l'acide sulfureux, tels que les acides chlorhydrique, sulfurique, etc... ou leurs sels solubles acides, transformant ainsi l'émulsion-mère anionique protéinée en une émulsion cationique active.

3. Procédé, suivant l'une quelconque des revendications 1 et 2, caractérisé en ce que les acides plus forts que l'acide sulfureux peuvent être remplacés par les sels acides des acides forts tels que, par exemple, le sulfate de chrome trivalent et, notamment, le déchet industriel qu'est le sulfate de fer $FeSO_4 7H_2O$.

4. Procédé, suivant l'une quelconque des revendications 1 à 3, caractérisé en ce qu'un mélange du sel acide $FeSO_4 7H_2O$, par exemple, et d'un sulfite, introduit dans une émulsion anionique protéinée en état de surstabilisation alcaline, exerce le même effet cationisant et stérilisant que le $SO_2$, c'est-à-dire qu'il produit une rupture adhésive modulable par le taux de sels introduits.

5. Procédé, suivant l'une quelconque des revendications 1 à 4, caractérisé en ce que la surstabilisation de l'émulsion anionique ne se fait plus dans l'usine d'émulsion, mais dans le malaxeur, de sorte que les granulats minéraux qui tournent dans le malaxeur recoivent en premier la dose d'une solution des matières protéiques dans une eau alcalinisée, la dose d'émulsion-mère anionique étant ajoutée sur les granulats protéinés, préalablement intimement mélangés, qui forment un milieu surstabilisant empêchant toute rupture de l'émulsion à court terme et à long terme, le mélange obtenu pouvant être transvasé dans un transporteur-malaxeur au moyen duquel il devient possible de desservir des chantiers situés à des heures de trajet, le mélange de sels acide et sulfureux étant ajouté au moment de l'alimentation des engins de pose de l'enrobé.

6. Procédé, suivant l'une quelconque des revendications 1 à 5, caractérisé en ce que les opérations de protéinisation des granulats sont effectuées dans le malaxeur d'une centrale à béton, sans nécessiter de modification de son installation générale, avec l'avantage de disposer immédiatement d'une installation en bonne place et de la flotille de transporteurs-malaxeurs généralement affectée à une telle centrale.

7. Procédé suivant l'une quelconque des revendications 1 à 6, caractérisé en ce qu'une flotille de transporteurs-malaxeurs indépendante, donc sans le sup port d'une centrale de béton, fonctionne seule comme usine d'enrobés avec une alimentation en granulats minéraux dosés et d'émulsion anionique également dosée, en ayant soin d'introduire la dose de solution de farine protéique avant l'émulsion-mère anionique dans un malaxeur préalablment nettoyé par un lavage.

8. Procédé, suivant l'une quelconque des revendications 1 à 7, caractérisé par le stockage rendu possible à moyen terme de l'enrobé à l'émulsion ou des granulats minéraux protéinés, simplement à terre, en les protégeant contre la pluie et l'assèchement, repris par transporteurs-malaxeurs, lesdits enrobés ou granulats étant transportables à n'importe quelle distance et pouvant être cationisés par le mélange de sels composé, d'une part, par un sel acide résultant de la combinaison d'un acide fort et d'une base faible et, d'autre part, par un sulfite assurant la stérilisation et le contrôle de la rupture.

9. Procédé, suivant l'une quelconque des revendications 1 à 8, caractérisé en ce que certains granulats minéraux souillés, notamment par des acides ou par les résidus de goudron dans les granulats à recycler, nécessitent une augmentation du taux d'alcalis, soit dans la solution aqueuse de la farine protéique, soit dans l'émulsion-mère anionique au moment de sa fabrication, soit en ajoutant les alcalis sur les granulats tournant dans le malaxeur, afin qu'une augmentation exagérée de la dose de farine au-delà de 1,5 % du poids de l'émulsion puisse être évitée.

10. Procédé, suivant l'une quelconque des revendications 1 à 9, caractérisé en ce qu'en vue de sa généralisation aussi bien pour les granulats minéraux souillés et très filléreux que pour les granulats bitumineux de recyclage et pour les granulats propres de toute provenance et de leur mélange, une seule et même solution aqueuse affectée à un poste d'enrobage à froid de matié res protéiques et d'alcalis est constituée, par exemple, de 50 Kg de farine protéique + 50 Kg de soude caustique en solution à 30 % + 250 Kg d'eau, suffit à résoudre tous les problèmes d'enrobage, soit par introduction de cette solution à raison de 10 % à 3 % dans l'émulsion-mère anionique, soit par mélange de la dose de granulats à enrober avec ces mêmes pourcentages de solution par rapport au poids de l'émulsion prévu pour l'enrobage, sachant que l'excès d'alcalis est neutralisé par un taux approprié des sels cationisants, stérilisants et acidifiants, dont une composition parmi les plus économiques comporte 67 % de sulfate de fer $FeSO_4 7H_2O$ + 33 % de sulfite de sodium $Na_2SO_3$ ou $Na_2S_2O_5$.

11. Procédé, suivant l'une quelconque des revendications 1 à 10, caractérisé en ce qu'une généralisation du procédé est basée sur trois constantes, à savoir :

a) une émulsion-mère anionique à un taux de bitume > 60 %

b) une solution de 50 Kg de farine protéique + 50 Kg de soude caustique en solution à 30 % + 250 Kg d'eau

ou

b') une solution de 50 Kg de farine protéique pour un minimum de soude caustique à un taux compris entre 0,1 % et 0,5 % par rapport au poids de l'émulsion dans 250 Kg d'eau + 25 Kg de carbonate de soude $Na_2CO_3$

ou

b") de la farine protéique et une solution à 5 % à 10 % de carbonate de soude

c) un mélange de sels cationisants, stérilisants et acidifiants égal ou équivalent au mélange de 67 % de sulfate de fer + 33 % d'un sulfite soluble.